# EUROPEAN PATENT SPECIFICATION

(11) **EP 3 398 359 B1**
(45) Date of publication and mention of the grant of the patent: **19.06.2024**
(21) Application number: 17743627.6
(22) Date of filing: 18.01.2017
(51) Int. Cl.: H04W 4/90, H04W 74/0833, H04W 76/18, H04W 76/50

(54) **EMERGENCY CALL PRIORITIZATION**
NOTRUFPRIORISIERUNG
PRIORISATION D'APPELS D'URGENCE

(30) Priority: 26.01.2016 US 201615006896
(43) Date of publication of application: 07.11.2018
(73) Proprietor: Huawei Technologies Co., Ltd., Longgang District Shenzhen, Guangdong 518129 (CN)
(72) Inventor: WANG, Julia, Shenzhen, Guangdong 518129 (CN); WANG, Limei, San Diego, CA 92126 (US); TANG, Yumin, San Diego, CA 92127 (US); JIA, Zhiping, Santa Clara, CA 95050 (US)
(74) Representative: Gill Jennings & Every LLP
(86) International application number: PCT/CN2017/071516
(87) International publication number: WO 2017/129012

(56) References cited:
- EP-A2- 0 994 604
- WO-A1-2010/107354
- WO-A1-2014/065593
- WO-A1-2015/080287
- CN-A- 102 291 836
- CN-A- 102 469 555
- CN-A- 102 740 493
- US-A1- 2010 254 365
- US-A1- 2012 275 305
- US-A1- 2013 148 497

## Description

### Technical Field

The present application is related to contention-based random access procedures for call establishment, and in particular to a give preference to emergency calls in contention-based random access procedures to reduce latency when a collision occurs.

### Background

Mobile phones initiate a random access procedure first when attempting to place a call. If an access attempt fails, the phone will wait a random back off time according to a uniform distribution between 0 and a back off parameter value prior to starting the random access procedure again. When multiple devices are competing for network resources at the same time, the risk of collision increases. It may take several access attempts to get radio resource for an emergency call establishment, which can result in long delays.

CN102291836A discloses a random access control method. In particular CN102291836A discloses that "if the terminal fails to receive RAR or if the terminal fails to access when competing access, and the failure times do not reach the maximum times of the lead code emission, the terminal calculates the delay time of next random access according to the current back off value for random access and the predetermined rule." Furthermore CN102291836A discloses that "when the back off value for each classification is determined, the principle of classification and network load information are considered. For example, for the terminal of high access priority, its back off value may be configured less."

US2012/275305A1 mentions that emergency service requires extreme short delay, EP0994604A2 teaches that in RBBAP (random backoff based access priority), requests associated with higher access priority will have a smaller average backoff delay, US2013/148497A1 is related to a MTC (machine type communication) which may determine a backoff time based on the quality of service information received from the wireless network, and WO2014/065593A1 discloses a method comprising identifying a prioritized access, receiving a backoff parameter from a network, and determining whether or not to apply the received backoff parameter according to the prioritized access. A further document of the prior art is WO 2015/080287 A1.

### Summary

According to an aspect, a mobile device implemented method is provided in accordance with appended claim 1.

According to another aspect, a machine readable storage device having instructions for execution by a processor to cause the machine to perform the above method is provided in accordance with appended claim 6.

According to another aspect, a device is provided in accordance with appended claim 7.

### Brief Description of the Drawings

FIG. 1 is a block diagram of a wireless communication network.
FIG. 2 is an example timing diagram illustrating timing between access attempts.
FIG. 3 is a flowchart illustrating a method of random access procedure for an emergency call according to an example embodiment.
FIG. 4 is a block schematic diagram of circuitry for executing one or more methods.

### Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

The functions or algorithms described herein may be implemented in software in one embodiment. The software may consist of computer executable instructions stored on computer readable media or computer readable storage device such as one or more non-transitory memories or other type of hardware based storage devices, either local or networked. Further, such functions correspond to modules, which may be software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system, turning such computer system into a specifically programmed machine.

According to the invention, preference is given to emergency calls in a contention based random access procedure to reduce the latency of user equipment (UE) emergency call at random access procedure phase and to improve emergency call establishment time. Example UEs include mobile phones and other wireless network connected devices. A back off time between access attempts by UE attempting to establish a call over a network is decreased for emergency calls, effectively giving emergency calls increased prioritization. Reducing the time between access attempts for emergency calls decreases latency for establishing emergency calls as compared to non-emergency calls, which are referred to as regular calls. According to the invention, a larger maximum number of preamble transmissions is used as compared to the maximum number of preamble transmissions for a non-emergency call.

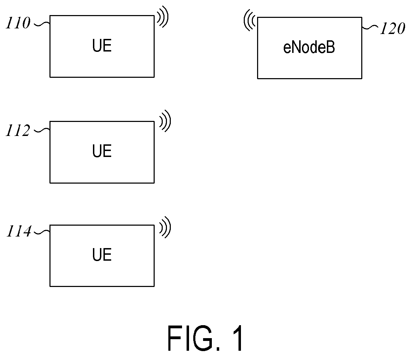

FIG. 1 is a block diagram of a wireless communication network 100 including multiple UEs at 110, 112, and 114 generating preamble transmissions to establish a call via an eNodeB (evolved node B) 120 device. A wireless communication network is not covered by the claimed invention. A preamble transmission is a first message (Random Access Preamble sent over a Random Access Channel (RACH)) of a Random Access Procedure sent to the network eNodeB 120 device to let the network know that it is trying to get access to the network. The Random Access Preamble differentiates requests coming from different UEs. At this stage, the UE does not have any resource or channel available to inform the network about its desire to connect to the network. Therefore the UE will send its request over the RACH. If there are many other UEs in the same area sending same request to the same eNodeB (cell), there is a possibility of collision among the requests coming from various other UEs. If two UEs use same RACH preambles at same time then there can be a collision. Various random access procedures are defined in CDMA (code division multiple access), GSM (global system for mobile communications), WCDMA (Wideband CDMA), and LTE (long term evolution - 3GPP 4G) specifications.

According to the invention, the back off time is a selected random value between 0 and a back off parameter value. The back off parameter value for an emergency call is referred to as a reduced back off parameter value. Using the reduced back off parameter value reduces the delay of subsequent random access attempt transmissions for emergency calls. Based on the number of access attempts that have failed, such as 2, 3, or more, the value of the reduced back off parameter is increased until the value reaches the regular back off parameter value.

A maximum number of random access preamble transmissions is also configurable. The maximum number of random access preamble transmissions may be set by a UE or a network, and is increased for an emergency call compared to a corresponding parameter for regular calls. Modification of the maximum number of access attempts parameter may further increase the likelihood that an emergency call will be established.

In further embodiments, both parameters may be set by a network operator or an OEM (original equipment manufacturer) and the network can dynamically change the values while regular calls follow a current standard specification such as 3GPP (3^{rd} Generation Partnership Project) and 3GPP2 (3^{rd} Generation Partnership Project 2) and may apply to all radio access technology (RAT).

In still a further embodiment, based on a real time network condition, networks may provide a dedicated range of the back off parameter for emergency calls and optionally a larger time range that is dedicated for regular calls. If a large volume of emergency calls are occurring, such as due to a large fire or other large emergency being witnessed by many people, the back off parameter value for emergency calls may be increased towards or to the regular call back off parameter value.

In one embodiment, under certain network conditions, the network may also give emergency calls a specific back off parameter value range, and provide a different range for regular calls. The range can be dynamically changed by the network based on the network information and condition. The emergency call back-off parameter value range may be [0 to Δb], and the regular call back off parameter value range may be from (Δb, max_back_off_value]. The Δb may be the emergency back off parameter value.

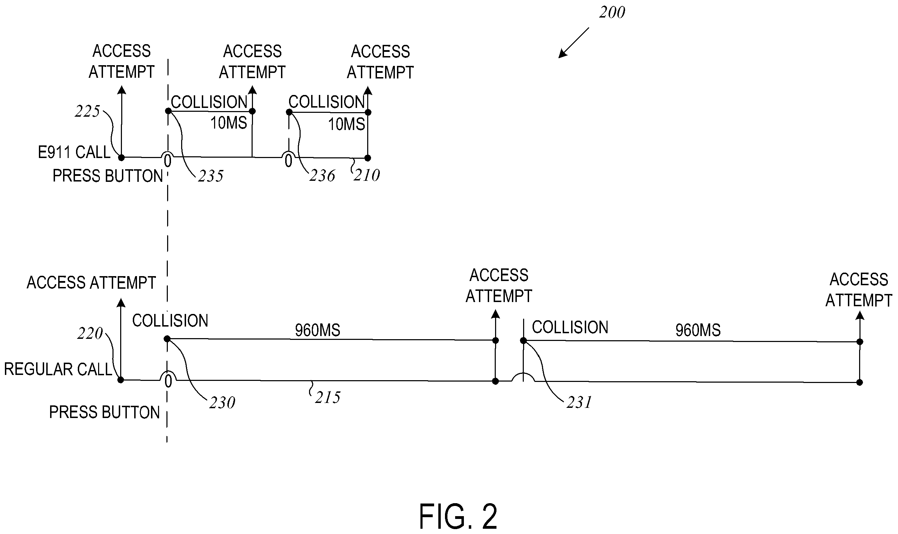

FIG. 2 is an example timing diagram illustrating timing between access attempts generally at 200 for both emergency calls at 210 and non-emergency or regular calls at 215, wherein such a timing diagram is not covered by the claimed invention. The back off time is a selected random value between 0 and a back off parameter value. The timing diagram example of FIG. 2 is a simplified illustration of timing for an emergency call with a back off time of 10 ms, where the selected random value is thus between 0 and 10 ms. For a non-emergency call, the back off time is illustrated as 960 ms, corresponding to a selected random value between 0 and 960 ms.

The actual time between access attempts will be based on the random values, which will on average be less than the 10 ms and 960 ms back off times shown. Various contention based random access procedures are described in CDMA (code division multiple access), GSM (global system for mobile communications), WCDMA (Wideband CDMA), and LTE (long term evolution - 3GPP 4G) RATs, and FIG. 2 is a simplified representation of a timing diagram of one example.

Access attempts for regular calls 215 occur with a back off time of 960ms and emergency calls 210 occur with a back off time of 10ms. A first access attempt occurs when a user, such as a human, presses a button to dial a number as indicated at 220 and 225 for regular and emergency calls respectively. The time interval is referred to as a back off time. The time interval starts when a collision is detected responsive to an access attempt as indicated by lines 230 and 231 for regular calls and 235 and 236 for emergency calls. As represented in FIG. 2, three access attempts occur in a much shorter time for the emergency call as compared to the regular call, increasing the odds of the emergency call being established with lower latency than the regular call. It is assumed that both calls are established on the third attempt in this depiction. If not, further attempts may be made in accordance with the respective back off times.

The back off parameter value for emergency calls is referred to as a reduced back off parameter value. The reduced back off parameter value in one embodiment is a value range to reduce the delay of subsequent random access attempt transmissions. Based on the number of access attempts that have failed, such as 2, 3, or more, the reduced back off parameter value is increased until the value reaches the regular back off parameter value.

A maximum number of access attempts parameter is also configurable. The maximum number of access attempts parameter may be set by the UE or network, and is increased over a corresponding parameter for regular calls. Modification of the maximum number of access attempts parameter may further increase the likelihood that an emergency call will be established.

In further embodiments, both parameters may be set by UE or network, and the network can dynamically change the values while regular calls follow a current network standard specification such as 3GPP and 3GPP2 and may apply to all radio access technology (RAT).

In still a further embodiment, based on a real time network condition, networks may provide a dedicated range of the back off parameter for emergency calls and a larger time range that is dedicated for regular calls. Note that the term "range" refers to a randomization of the back off parameter that may be performed by the UE to reduce the chances that multiple UE will keep repeating attempts on a same schedule, increasing the chances of a collision. Thus, the term back off time parameter results in a random amount of time between additional access attempts. The range may be centered about the parameter in some embodiments, effectively being an average time between access attempts.

A call box, commonly referred to as a network emulator, may be configured to detect whether or not a reduced back off parameter is being used by a UE. The call box simply does not respond to attempts, causing the UE to continue access attempts. If the time between access attempts for emergency calls is shorter than the time between access attempts for regular calls, it can be determined that a shorter back off parameter is being used for emergency calls.

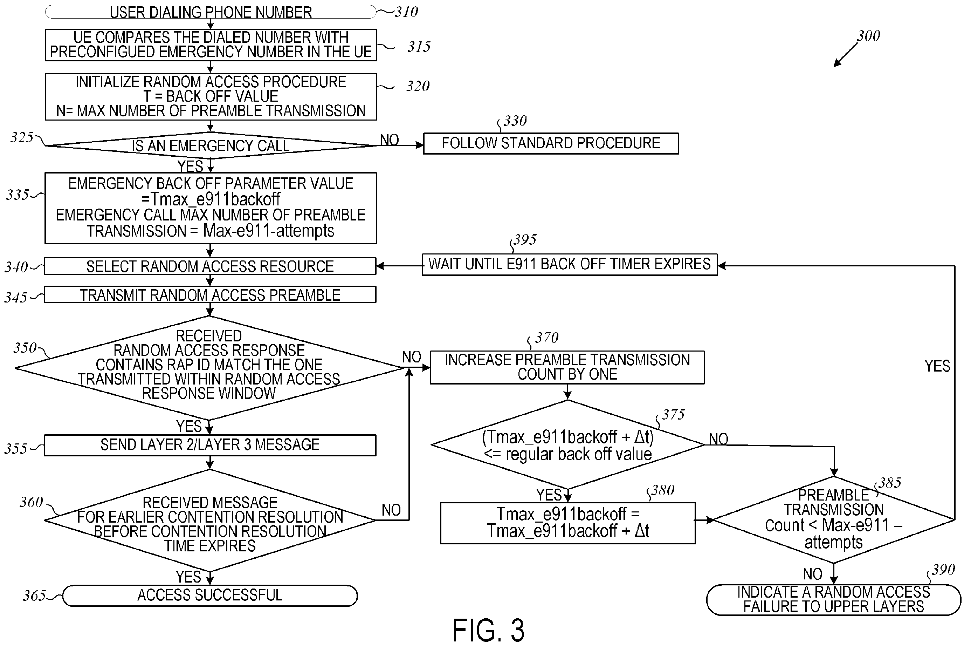

FIG. 3 is a flowchart illustrating a random access procedure for an emergency call at 300. Method 300 begins at 310 with a user entering a phone number in a UE, such as by pressing numbers or selecting a contact or already entered number and making a selection to begin a call. The UE compares the selected number at 315 with preconfigured emergency numbers known to the UE. A random access procedure is initialized at 320 with a parameter, T, set to a back off parameter value, and a parameter, N, set to a maximum number of preamble transmissions, where preamble corresponds to an uplink resource, and some other parameters initialization.

At 325, UE determines whether or not the call is an emergency call. Operation 315 may set a flag indicating the call is an emergency call in one embodiment, with operation 325 checking the flag to make the determination, or operation 325 may directly check the selected call number against the list of known emergency numbers in the location of the UE in order to make the determination. If the call is not an emergency call, a standard random access procedure is followed for non-emergency, regular, calls at 330.

If the call is determined to be an emergency call, the back off parameter value is set to a shorter value, referred to as for example, Tmax_e911backoff. The emergency call back off parameter value may be set by the network or the UE in various embodiments. The back off parameter value may be very small, and is gradually increased until the emergency call back off parameter value is the same as the regular call back off parameter value in some embodiments. The emergency call back off parameter value may be initially set to zero in some embodiments. According to the invention, the max number of preamble transmissions is set to a larger number as compared to the maximum number of random access preamble transmissions for a non-emergency call, referred to as for example, Max-e911-attempts. The emergency call max number of random access preamble transmissions may be set by the network or the UE in various embodiments.

At 340, a random access resource is selected. The random access preamble is transmitted at 345.

At 350, a random access response is received and contains a random access preamble identifier (RAP ID). Operation 350 determines if the received RAP ID matches the RAP ID transmitted within a random access response window. If yes, a layer 2/layer 3 message is sent to 355, and an operation 360 determines if the received message for earlier contention resolution was received before a contention resolution time expires. If yes, the random access is successful at 365. A contention resolution timer may be used as a timer for contention resolution. If the UE does not receive the contention resolution message in this time frame, the UE will start to obtain an access resource again, essentially starting over. If the UE does not receive the random access response which contains a random access preamble identifier transmitted within a random access response window, method 300 proceeds to operation 370.

If the access is not successful, corresponding to the UE not receiving the earlier contention resolution within the contention resolution time, a preamble transmission count is increased by one at 370. According to the invention, it is determined if the emergency call back off parameter value plus an increment, Δt, is less than or equal to the maximum back off parameter value for a regular call. If yes, Δt is added to Tmax_e911backoff. Δt maybe set to 0 or a small value and it is configurable.

The method proceeds to operation 385 from either operation 380, or operation 375 if the back off parameter value plus an increment, Δt, is greater than the maximum back off parameter value for a regular call. At operation 385, the preamble transmission count is checked to determine whether it is still less than the maximum number of random access preamble transmissions, Max-e911-attempts. If not, an indication of the random access procedure failing is provided to upper protocol stack layers of the UE, at 390, such as a medium access control layer and a radio resource control layer. If yes, the method 300 waits until an emergency back off timer expires at 395, and the method continues at 340 to make another attempt to establish the call. The back off time is a selected random value between 0 and a back off parameter value.

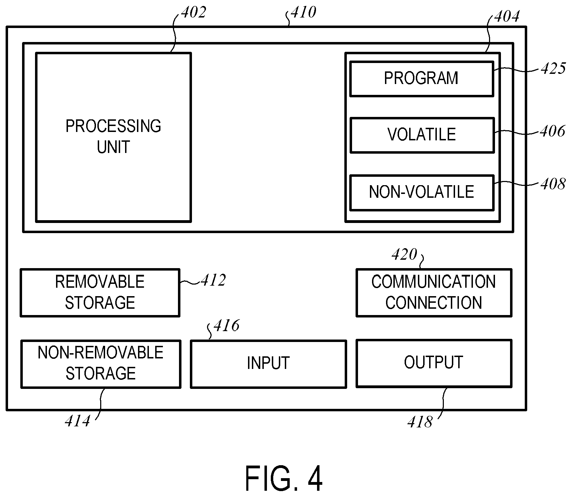

FIG. 4 is a block schematic diagram of a computer system 410 to implement methods according to example embodiments. A computer system as such is not covered by the claimed invention. All components need not be used in various embodiments. One example computing device in the form of a computer 410, may include a processing unit 402, memory 404, removable storage 412, and non-removable storage 414. Although the example computing device is illustrated and described as computer 410, the computing device may be in different forms in different embodiments. For example, the computing device may instead be a smartphone, a tablet, smartwatch, or other computing device including the same or similar elements as illustrated and described with regard to FIG. 4. Devices such as smartphones, tablets, and smartwatches are generally collectively referred to as mobile devices. Further, although the various data storage elements are illustrated as part of the computer 410, the storage may also or alternatively include cloud-based storage accessible via a network, such as the Internet.

Memory 404 may include volatile memory 406 and non-volatile memory 408. Computer 410 may include - or have access to a computing environment that includes - a variety of computer-readable media, such as volatile memory 406 and non-volatile memory 408, removable storage 412 and non-removable storage 414. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices capable of storing computer-readable instructions for execution to perform functions described herein.

Computer 410 may include or have access to a computing environment that includes input 416, output 416, and a communication connection 420. In one embodiment, the communication connection 420 is a transceiver coupled to an antenna and operable to communicate via a wireless network, such as a cellular network. Processing unit 104 may include multiple processors for executing code related to multiple different levels of a wireless protocol stack in accordance with one or more wireless standards to transmit and receive signals wirelessly via the communication connection. Output 418 may include a display device, such as a touchscreen, that also may serve as an input device. The input 416 may include one or more of a touchscreen, touchpad, mouse, keyboard, camera, one or more device-specific buttons, one or more sensors integrated within or coupled via wired or wireless data connections to the computer 410, and other input devices. The computer may operate in a networked environment using a communication connection to connect to one or more remote computers, such as database servers, including cloud based servers and storage. The remote computer may include a personal computer (PC), server, router, network PC, a peer device or other common network node, or the like. The communication connection may include a Local Area Network (LAN), a Wide Area Network (WAN), cellular, WiFi, Bluetooth, or other networks.

Computer-readable instructions stored on a computer-readable storage device are executable by the processing unit 402 of the computer 410. A hard drive, CD-ROM, and RAM are some examples of articles including a non-transitory computer-readable medium such as a storage device. The terms computer-readable medium and storage device do not include carrier waves. For example, a computer program 425 capable of providing a generic technique to perform access control check for data access and/or for doing an operation on one of the servers in a component object model (COM) based system may be included on a CD-ROM and loaded from the CD-ROM to a hard drive. The computer-readable instructions allow computer 410 to provide generic access controls in a COM based computer network system having multiple users and servers.

## Claims

1. A mobile device implemented method comprising:
receiving a request at the mobile device from a user to make an emergency call over a network;
attempting to place the emergency call via the mobile device;
detecting a failure of a random access procedure for the emergency call by the mobile device;
using a reduced back off parameter value as compared to a back off parameter value for a non-emergency call; and
re-attempting the random access procedure for the emergency call via the mobile device according to the reduced back off parameter value, wherein a back off time for the re-attempt of the random access procedure is a selected random value between 0 and the reduced back off parameter value;
**characterized in that**,
after the re-attempting the random access procedure, the reduced back off parameter value is increased (380) and a random access preamble transmission count is incremented (370); and
repeating re-attempting the random access procedure until the reduced back off parameter value reaches a non-emergency back off parameter value and a maximum random access preamble transmission count is reached;
wherein the maximum random access preamble transmission count for an emergency call is greater than a maximum random access preamble transmission count for a non-emergency call.

2. The method of claim 1 wherein the request to make an emergency call is detected as an emergency call by the mobile device comparing (315) a phone number with known emergency call phone numbers.

3. The method of claim 1 wherein the reduced back off parameter value for emergency calls is configured by the mobile device or received by the mobile device from the network.

4. The method of claim 3 wherein the back off parameter value for non-emergency calls is dynamically changed by the network to a parameter value greater than or equal to the emergency call back off parameter and up to a maximum back off parameter value.

5. The method of claim 3 wherein the back off parameter value for emergency calls is changed as a function of volume of emergency calls being placed by devices coupled to the network.

6. A machine readable storage device having instructions for execution by a processor (402) to cause the machine to perform the method according to any one of claims 1-5.

7. A device comprising:
a processor (402);
a transceiver (420) coupled to the processor; and
a memory device (404) coupled to the processor (402) and having a program (425) stored thereon for execution by the processor (402) to perform the method according to any one of claims 1-5.

## Patentansprüche

1. Verfahren, das durch eine mobile Vorrichtung implementiert wird, das umfasst:
Empfangen einer Anforderung an die mobile Vorrichtung von einem Benutzer, um einen Notfallanruf über ein Netzwerk abzusetzen;
Versuchen, den Notfallanruf über die mobile Vorrichtung zu tätigen;
Erkennen eines Versagens eines Direktzugriffsvorgangs für den Notfallanruf durch die mobile Vorrichtung;
Verwenden eines reduzierten Backoff-Parameterwerts im Vergleich zu einem Backoff-Parameterwert für einen Nicht-Notfall-Anruf; und
erneutes Versuchen des Direktzugriffvorgangs für den Notfallanruf über die mobile Vorrichtung gemäß dem reduzierten Backoff-Parameterwert, wobei eine Backoff-Zeit für den erneuten Versuch des Direktzugriffsvorgangs ein ausgewählter Zufallswert zwischen 0 und dem reduzierten Backoff-Parameterwert ist;
**dadurch gekennzeichnet, dass,**
nach dem erneuten Versuchen des Direktzugriffsvorgangs, der reduzierte Backoff-Parameterwert erhöht (380) wird und eine Präambelübertragungszahl eines Direktzugriffs inkrementiert (370) wird; und
Wiederholen des erneuten Versuchens des Direktzugriffsvorgangs, bis der reduzierte Backoff-Parameterwert einen Backoff-Parameterwert eines Nicht-Notfalls erreicht und eine maximale Präambelübertragungszahl des Direktzugriffs erreicht ist;
wobei die maximale Präambelübertragungszahl des Direktzugriffs für einen Notfallanruf größer als eine maximale Präambelübertragungszahl des Direktzugriffs für einen Nicht-Notfall-Anruf ist.

2. Verfahren nach Anspruch 1, wobei die Anforderung, einen Notfallanruf abzusetzen, als ein Notfallanruf durch die mobile Vorrichtung erkannt wird, die eine Telefonnummer mit bekannten Notfallanruftelefonnummern vergleicht (315).

3. Verfahren nach Anspruch 1, wobei der reduzierte Backoff-Parameterwert für Notfallanrufe durch die mobile Vorrichtung konfiguriert oder durch die mobile Vorrichtung von dem Netzwerk empfangen wird.

4. Verfahren nach Anspruch 3, wobei der Backoff-Parameterwert für Nicht-Notfall-Anrufe durch das Netzwerk auf einen Parameterwert, der größer als oder gleich dem Backoff-Parameter des Notfallanrufs und bis zu einem maximalen Backoff-Parameterwert ist, dynamisch geändert wird.

5. Verfahren nach Anspruch 3, wobei der Backoff-Parameterwert für Notfallanrufe in Abhängigkeit eines Volumens von Notfallanrufen, die durch Vorrichtungen, die mit dem Netzwerk gekoppelt sind, getätigt werden, geändert wird.

6. Maschinenlesbare Speicherungsvorrichtung, die Anweisungen für eine Ausführung durch einen Prozessor (402) aufweist, um die Maschine zu veranlassen, das Verfahren nach einem der Ansprüche 1 bis 5 durchzuführen.

7. Vorrichtung, die umfasst:
einen Prozessor (402);
einen Sendeempfänger (420), der mit dem Prozessor gekoppelt ist; und
eine Speichervorrichtung (404), die mit dem Prozessor (402) gekoppelt ist und ein Programm (425) für die Ausführung durch den Prozessor (402) darauf gespeichert aufweist, um das Verfahren nach einem der Ansprüche 1 bis 5 durchzuführen.

## Revendications

1. Procédé mis en oeuvre par dispositif mobile comprenant :
la réception d'une demande au niveau du dispositif mobile en provenance d'un utilisateur pour effectuer un appel d'urgence sur un réseau ;
la tentative de placer l'appel d'urgence par l'intermédiaire du dispositif mobile ;
la détection d'un échec d'une procédure d'accès aléatoire pour l'appel d'urgence par le dispositif mobile ;
l'utilisation d'une valeur de paramètre de recul réduite par comparaison avec une valeur de paramètre de recul pour un appel non d'urgence ; et
la nouvelle tentative de la procédure d'accès aléatoire pour l'appel d'urgence par l'intermédiaire du dispositif mobile selon la valeur de paramètre de recul réduite, dans lequel un délai de recul pour la nouvelle tentative de la procédure d'accès aléatoire est une valeur aléatoire sélectionnée entre 0 et la valeur de paramètre de recul réduite ;
**caractérisé en ce que,**
après la nouvelle tentative de la procédure d'accès aléatoire, la valeur de paramètre de recul réduite est augmentée (380) et un comptage de transmission de préambule d'accès aléatoire est incrémenté (370) ; et
la répétition de la nouvelle tentative de la procédure d'accès aléatoire jusqu'à ce que la valeur de paramètre de recul réduite atteigne une valeur de paramètre de recul non d'urgence et qu'un comptage de transmission de préambule d'accès aléatoire maximal soit atteint ;
dans lequel le comptage de transmission de préambule d'accès aléatoire maximal pour un appel d'urgence est supérieur à un comptage de transmission de préambule d'accès aléatoire maximal pour un appel non d'urgence.

2. Procédé selon la revendication 1, dans lequel la demande pour passer un appel d'urgence est détectée comme appel d'urgence par la comparaison (315) par le dispositif mobile d'un numéro de téléphone avec des numéros de téléphone d'appel d'urgence connus.

3. Procédé selon la revendication 1, dans lequel la valeur de paramètre de recul réduite pour des appels d'urgence est configurée par le dispositif mobile ou reçue par le dispositif mobile en provenance du réseau.

4. Procédé selon la revendication 3, dans lequel la valeur de paramètre de recul pour des appels non d'urgence est modifiée dynamiquement par le réseau en une valeur de paramètre supérieure ou égale au paramètre de recul d'appel d'urgence et jusqu'à une valeur de paramètre de recul maximale.

5. Procédé selon la revendication 3, dans lequel la valeur de paramètre de recul pour des appels d'urgence est modifiée en fonction d'un volume d'appels d'urgence placés par des dispositifs couplés au réseau.

6. Dispositif de stockage lisible par machine ayant des instructions d'exécution par un processeur (402) pour amener la machine à mettre en oeuvre le procédé selon l'une quelconque des revendications 1 à 5.

7. Dispositif comprenant :
un processeur (402) ;
un émetteur-récepteur (420) couplé au processeur ; et
un dispositif de mémoire (404) couplé au processeur (402) et ayant un programme (425), stocké sur celui-ci, d'exécution par le processeur (402) pour mettre en oeuvre le procédé selon l'une quelconque des revendications 1 à 5.
